**Europäisches Patentamt**

**European Patent Office**

**Office européen des brevets**

(19)

(11) Veröffentlichungsnummer : **0 066 837**
**B1**

(12) **EUROPÄISCHE PATENTSCHRIFT**

(45) Veröffentlichungstag der Patentschrift : 28.11.84

(21) Anmeldenummer : 82104823.8

(22) Anmeldetag : 02.06.82

(51) Int. Cl.³ : **B 05 D 1/06**, B 05 C 15/00, B 05 B 5/02

(54) Verfahren zum elektrostatischen Auftragen von pulverförmigen Stoffen auf Werkstücken und Vorrichtung zur Durchführung des Verfahrens.

(30) Priorität : 04.06.81 DE 3122204

(43) Veröffentlichungstag der Anmeldung : 15.12.82 Patentblatt 82/50

(45) Bekanntmachung des Hinweises auf die Patenterteilung : 28.11.84 Patentblatt 84/48

(84) Benannte Vertragsstaaten : AT CH DE FR GB IT LI

(56) Entgegenhaltungen : Keine

(73) Patentinhaber : Ortmeier, Erich
Schönstrasse 20
D-8000 München 90 (DE)

(72) Erfinder : Ortmeier, Erich
Schönstrasse 20
D-8000 München 90 (DE)

(74) Vertreter : Zmyj, Erwin, Dipl.-Ing.
Postfach 95 04 28
D-8000 München 95 (DE)

EP 0 066 837 B1

Jouve, 18, rue St-Denis, 75001 Paris, France

## Beschreibung

Die Erfindung bezieht sich auf ein Verfahren zum elektrostatischen Auftragen von pulverförmigen Stoffen auf Werkstücken, bei dem der pulverförmige Stoff mittels eines Fördergases den zu beschichtenden Werkstücken zugeführt und die nicht an den Werkstücken haftenden überschüssigen Stoffpartikel der Wiederverwendung zugeführt werden. Weiterhin bezieht sich die Erfindung auf eine Vorrichtung zur Durchführung des Verfahrens.

Bei dem bekannten Verfahren wird der pulverförmige Stoff mittels Luft durch eine Sprühpistole, in welcher der pulverförmige Stoff elektrostatisch aufgeladen wird, in eine Beschichtungskabine eingesprüht, in welcher sich die zu beschichtenden Werkstücke befinden. Außerdem wird in der Beschichtungskabine mittels eines Gebläses ein Trägerluftstrom erzeugt, der so kräftig ausgebildet ist, daß er das gesamte überschüssige pulverförmige Material aus der Beschichtungskabine zu einer Abscheidevorrichtung trägt. Dieser Trägerluftstrom ist notwendig, um die Konzentration des Pulver-Luftgemisches unter einem zündfähigen Gemisch zu halten. Dieser Trägerluftstrom, der zu einer kräftigen Strömung innerhalb der Beschichtungskabine führt und derjenigen Luftströmung überlagert ist, die sich aus der Einführung der Förderluft für das pulverförmige Material ergibt, hat den Nachteil, daß sich das Pulver in verschieden dicken Schichten auf den Werkstücken ablagert. Auf der unmittelbar angeströmten Seite der Werkstücke ist die Schicht des abgelagerten Pulvers dicker als auf der im Windschatten der Strömung liegenden Seite der Werkstücke. Dies ist für Gegenstände, bei denen es auf eine äußerst gleichmäßige Beschichtung ankommt, sehr störend. Gegenstände bei denen diese unterschiedlichen Schichten nicht akzeptiert werden können, sind beispielsweise Brillengestelle, die aufgrund ihrer modischen Schmuckwirkung, die mit dem Brillengestell angestrebt wird, eine äußerst gleichmäßige und fehlerfreie Beschichtung erfordern. Solche Fehler können durch den Trägerluftstrom hervorgerufen werden, der mit Verunreinigungen beladen ist, wenn nicht besonders aufwendige Maßnahmen getroffen werden, um auch die feinsten Verunreinigungen herauszufiltern. Solche Verunreinigungen spielen bei größeren Gegenständen kaum eine Rolle, doch sind Staubpartikel oder Haarteile bei den feinen Brillengestellen so störend, daß diese Teile als Ausschußware zu betrachten ist.

Aufgabe der Erfindung ist es ein Verfahren und eine Vorrichtung zum elektrostatischen Auftragen von pulverförmigen Stoffen auf Werkstücken bereitzustellen, mit deren Hilfe es möglich ist eine Beschichtung hoher Qualität , d. h. mit gleichbleibenden Schichtdicken und frei von Verunreinigungen zu ermöglichen.

Diese Aufgabe wird ausgehend von einem Verfahren der eingangs erläuterten Art erfindungsgemäß dadurch gelöst, daß das Auftragen in einem gegen Eindringen von Umgebungsluft abgesperrten Beschichtungsraum erfolgt, in den ausschließlich das zur Förderung des Pulvers notwendige Fördergas eingeführt wird, daß die in dem Beschichtungsraum herrschende Gasströmung ausschließlich auf derjenigen Gasströmung beruht, die sich aus der Einführung des Pulvers ergibt, daß in dem Beschichtungsraum ein geringer Überdruck gegenüber der Atmosphäre aufrechterhalten wird und daß als Fördergas ein inertes, explosionsverhinderndes Gas verwendet wird.

Der Grundgedanke der Erfindung besteht also darin ein inertes, explosionsverhinderndes Fördergas für das Einsprühen des pulverförmigen Stoffes zu verwenden, wodurch es nicht mehr notwendig ist einen Umluftstrom aufrechtzuerhalten, der bei den bekannten Verfahren erzeugt werden mußte, um die Konzentration des Pulvers unter einer zündfähigen Konzentration zu halten. Wegen Fehlens eines Umluftstromes bzw. Trägerluftstromes zur Abführung der überschüssigen Stoffpartikel ist der Nachteil beseitigt, daß Verunreinigungen auf die zu beschichtenden Gegenstände gelangen können, weil das Fördergas, für welches beispielsweise Stickstoff aus einer Flasche verwendet wird, völlig frei von Verunreinigungen ist. Da ohne Trägerluftstrom gearbeitet wird, herrscht auch eine äußerst geringe Strömung in dem Beschichtungsraum, die nur auf die Einführung des Fördergases zurückzuführen ist. Die eingeführten Pulverteile befinden sich also nahezu in der Schwebe und können sich von allen Seiten gleichmäßig an dem Werkstück ablagern, so daß völlig gleichmäßige Schichtdicken entstehen. Da in dem Beschichtungsraum ein geringer Überdruck aufrechterhalten wird, kann keine Umgebungsluft in den Beschichtungsraum eindringen. Die wesentlichen Merkmale der Erfindung bestehen also darin, daß als Fördergas ein inertes, explosionsverhinderndes Gas verwendet wird und daß in dem Beschichtungsraum nur eine äußerst geringe Gasströmung vorhanden ist, die notwendig ist um das Fördergas in den Beschichtungsraum zusammen mit dem Pulver einführen zu können und dieses Gas wieder aus dem Beschichtungsraum ausströmen zu lassen. Wesentlich ist hierbei, daß eine starke Strömung, wie sie durch den Trägerluftstrom zur Herabsetzung der Pulver-Luftkonzentration notwendig ist, entfällt.

Damit das überschüssige Pulver nicht in die Umgebung gelangt, ist in weiterer Ausgestaltung der Erfindung das Fördergas über eine Abscheidevorrichtung für den mitgeführten pulverförmigen Stoff aus dem geschlossenen Beschichtungsraum abführbar.

Eine weitere vorteilhafte Ausgestaltung des Verfahrens besteht darin, daß das überschüssige Pulver direkt aus dem Beschichtungsraum wieder dem zum Auftragen verwendeten Förderstrom zugeführt wird. Bezogen auf die verwendete Anlage hat diese Verfahrensweise den Vorteil, daß ein zusätzlicher Pulverbehälter nicht erforderlich ist. Bei den bekannten Verfahren muß das überschüssige Pulver erst aufbereitet, insbesondere gereinigt werden, bevor es dem Beschichtungsvorgang wieder zugeführt werden kann. Da eine Verunreinigung aus den weiter oben geschilderten Gründen nicht eintreten kann, kann das überschüssige Pulver unmittelbar wieder in den Beschichtungsraum eingeführt werden, wodurch nahezu das gesamte eingesetzte Pulver verwendet werden kann. Außerdem kommt man mit sehr wenig Pulver aus, das sich im stetigen Kreislauf befindet.

Die Vorrichtung zur Durchführung des Verfahrens mit einer Beschichtungskabine, einer in die Beschichtungskabine hineinreichenden Pulver-Sprühpistole und einer Abscheidevorrichtung, über die das Fördergas für den pulverförmigen Stoff aus der Beschichtungskabine Abführbar ist, ist erfindungsgemäß dadurch gekennzeichnet, daß die Beschichtungskabine gegen ein Eindringen von Umgebungsluft abgeschlossen und die Sprühpistole abgedichtet in die Beschichtungskabine eingeführt ist. Die Sprühpistole kann dabei innerhalb der Kabine mittels eines Manipulators bewegbar oder in der Wand der Beschichtungskabine geführt sein, um sämtliche in der Beschichtungskabine eingebrachten Gegenstände mit den pulverförmigen Stoffen besprühen zu können.

Eine Bewegungsmöglichkeit trotz abgedichteter Führung ist gemäß einer Weiterbildung der Erfindung dadurch ermöglicht, daß die Sprühpistole in einer vorzugsweise dursichtig ausgebildeten Platte gehalten ist, die in abgedichteten Führungen verschiebbar geführt ist. Die Ausbildung der Platte als durchsichtige Platte hat den Vorteil, daß zusätzliche Beobachtungsfenster entfallen können. Die Länge der Platte ist so gewählt, daß sie auch in den Endstellungen die Öffnung in der Wand der Beschichtungskabine abdichtend überdeckt.

Eine besonders vorteilhafte Ausgestaltung der Vorrichtung zur Durchführung des Verfahrens ergibt sich dadurch, daß der Boden der Beschichtungskabine als Fluid-Boden bzw. Wirbelschicht-Boden ausgebildet ist, dem zur Fluidisierung des sich absetzenden pulverförmigen Stoffes das gleiche Gas zugeführt wird, wie es als Fördergas benutzt wird und daß der Raum über dem Fluidboden mit einer Vorrichtung zum Abziehen des überschüssigen Pulvers und Zuführen desselben zur Sprühpistole versehen ist. Diese Art der Ausbildung der Beschichtungskabine ist insofern besonders vorteilhaft, als der untere Teil der Beschichtungskabine gleichzeitig als Pulverbehälter für die elektrostatische Anlage dient. Für den Betrieb der Beschichtungskabine, d. h. für die Fluidisierung des Wirbelschicht-Bodens, sowie für die Beaufschlagung eines Injektors, der das fluidisierte Pulver aus dem Pulverbehälter abzieht und es der Sprühpistole zuführt, wird vorzugsweise Stickstoff als explosionsverhinderndes Gas benutzt, welches in Druckflaschen in vorgespanntem Zustand zur Verfügung steht, so daß es über ein entsprechendes Druckreduzierventil direkt verwendbar ist. Stickstoff als Fördergas hat auch den Vorteil, daß es ohne weiteres aus der Kabine in die Atmosphäre abgeleitet werden kann, wobei es vorzugsweise durch ein Filter geleitet wird, in welchem die feinsten Pulverteile ausgeschieden werden.

Die Beschichtungskabine kann einen verschließbaren Deckel zur Beschickung mit den zu beschichtenden Werstükcen aufweisen, die von einem Träger aufnehmbar sind, der auf ein in der Beschichtungskabine in Drehung versetzbares teleskopartig abgefedertes Aufnahmerohr aufsteckbar ist, das einen Mitnehmer für den Träger aufweist. Die Anordnung eines teleskopartig abgefederten Aufnahmrohres erleichtert das Einführen des mit den zu beschichtenden Gegenständen versehenen Trägers, weil dieser nicht bis zu dem Boden der Kabine eingeführt werden muß, um ihm auf das Aufnahmerohr, das mit einem Mitnehmer versehen ist, aufstecken zu können. Die Feder in dem Teleskoprohr ist dabei so stark bemessen, daß das Gewicht des Trägers das Teleskoprohr soweit zusammenschiebt, daß der Eingriff mit dem Mitnehmer herbeiführbar und der Träger mit den zu beschichtenden Gegenständen vollständig in der Beschichtungskabine aufgenommen ist.

Um die Beschichtungskabine, wenn sie mit einem oberen Deckel versehen ist, leichter reinigen zu können, ist diese gemäß einer Weiterbildung der Erfindung schwenkbar gelagert.

Die Erfindung ist in der Zeichnung beispielsweise dargestellt. In dieser zeigen :

Figur 1 eine Vorderansicht einer kompletten Beschichtungsanlage mit einer Beschichtungskabine nach der Erfindung ;

Figur 2 eine Seitenansicht der Anordnung nach Fig. 1 ; und

Figur 3 eine Ansicht eines Trägers für die zu beschichtenden Gegenstände.

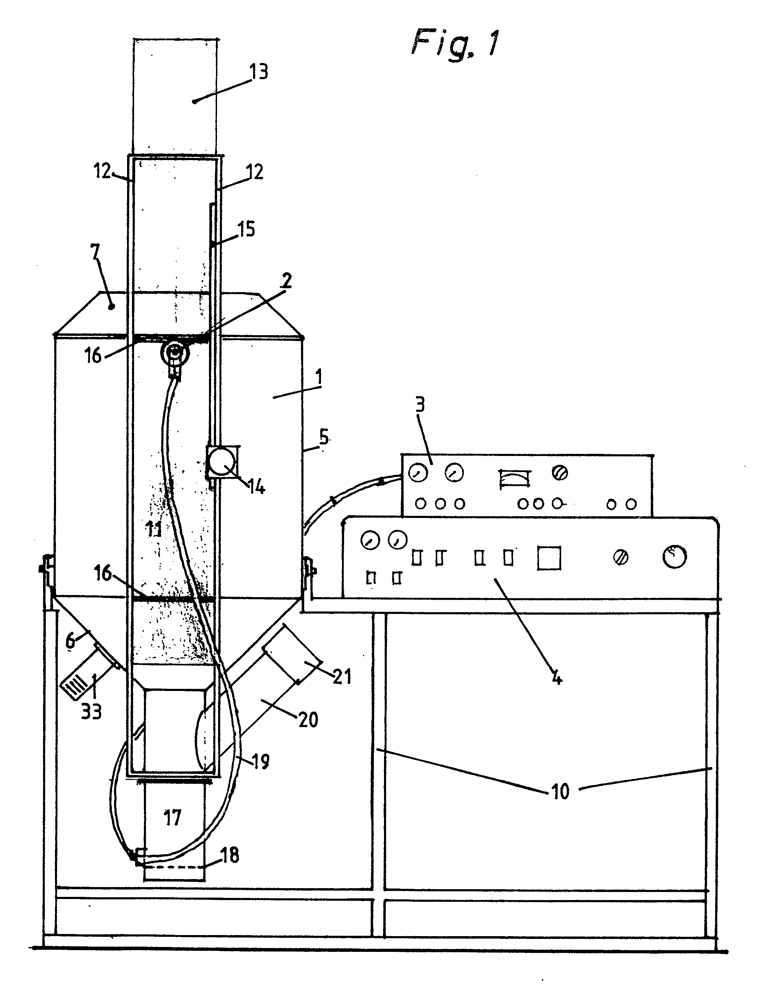

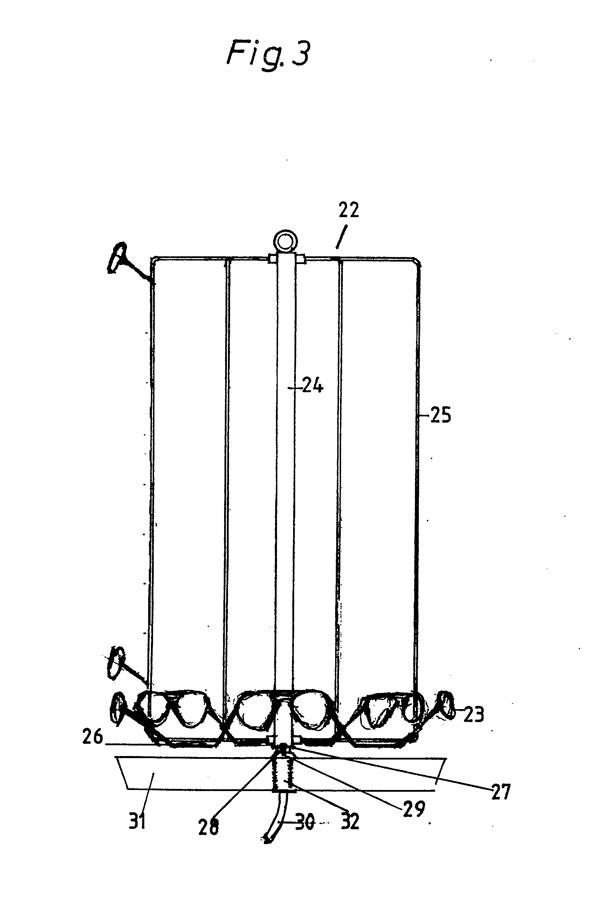

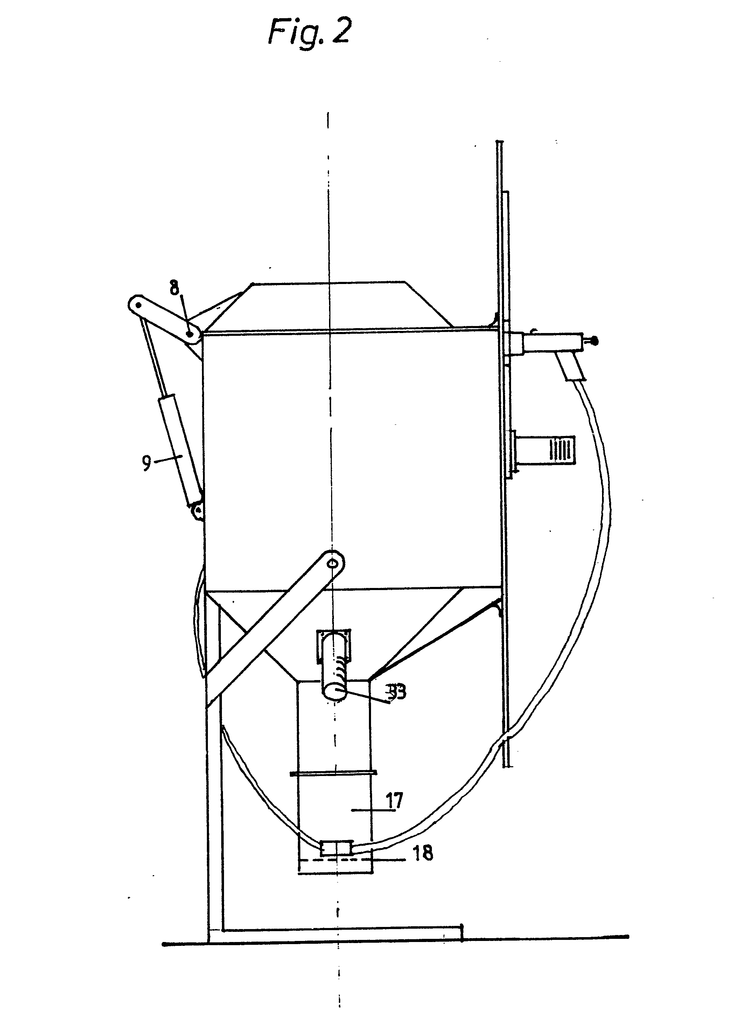

Wie aus den Fig. 1 und 2 ersichtlich umfaßt eine Beschichtungsanlage eine Beschichtungskabine 1 mit Pulver-Sprühpistole 2, eine elektrostatische Anlage 3 zur Aufladung des zu versprühenden pulverförmigen Stoffes sowie eine Steuer- und Schalteinrichtung 4, mit deren Hilfe die verschiedenen Funktionen der zu der Beschichtungsanlage noch gehörenden Antriebe und Fördergaszuführungen überwacht werden können.

Die Beschichtungskabine besteht aus einem zylinderförmigen Mantel 5 an dem sich nach unten ein kegelförmiger Boden 6 anschließt. Diese Beschichtungskabine ist mittels eines Deckels 7 verschließbar, der mittels eines Scharniers 8 schwenkbar angeordnet und durch einen Druckluftzylinder 9 betätigbar ist. Die Beschichtungskabine 1 steht auf Füßen 10 und weist an ihrer Vorderseite eine über die gesamte Mantelhöhe sich erstreckende Öffnung 11 auf.

Zu beiden Seiten der Öffnung ist eine Führung 12 vorgesehen, die sich nach oben und unten jeweils um die Höhe des Mantels 5 über die Beschichtungskabine 1 hinauserstreckt. In dieser Führung ist eine durchsichtige Platte 13 verschiebbar geführt und durch einen Motor 14 verschiebbar, der in eine an der Platte 13 vorgesehene Zahnstange 15 mittels eines nicht dargestellten Ritzels eingreift.

In der Platte 13 ist die Sprühpistole 2 abgedichtet gehalten, so daß sie bei einer Verschiebung der Platte, die die doppelte Länge einer Mantelhöhe aufweist, den gesamten Innenraum der Beschichtungskabine 1 von oben nach unten durchfahren kann.

Am oberen und unteren Ende der Öffnung 11 sind quer zur Längsrichtung der Platte 13 verlaufende Abstreifer 16 an der Beschichtungskabine vorgesehen, so daß in Verbindung mit den abgedichteten Führungen 12, die die Platte 13 wie eine Fensterscheibe in den Fensterführungen von Kraftfahrzeugen führen, die Beschichtungskabine trotz der Verschiebbarkeit der Platte 13 stets abgedichtet sit, wenn der Deckel 7 geschlossen ist. Die Abstreifer 16 dienen nämlich gleichzeitig als Dichtung.

An das untere Ende des kegelförmigen Bodens 6 schließt sich ein zylinderförmiger Behälter 17 an, der durch einen mit Gas beaufschlagbaren eingesetzten Fluidboden 18 unterteilt ist. Über eine Leitung 19 ist die Sprühpistole 2 mit dem zylindrischen Behälter 17 verbunden, der als Auffangbehälter für das in der Kabine nicht an den zu beschichtenden Gegenständen haften bleibende Pulver und gleichzeitig als Pulverbehälter für die elektrostatische Anlage dient.

Mit dem Behälter 17 ist ein schräg nach oben gerichteter Stutzen 20 verbunden, der an seinem Ende ein Filter 21 aufweist. Über diesen Stutzen 20 und das Filter 21 kann das mittels der Sprühpistole 2 in die Beschichtungskabine 1 eingeführte Fördergas entweichen. Gleichzeitig wird über diesen Stutzen das zur Fluidisierung des in dem Behälter 17 aufgefangenen Pulvers eingeführte Gas abgeleitet.

In Fig. 3 ist ein Träger 22 für die zu beschichtenden Gegenstände 23 gezeigt, der aus einem zentralen Rohr 24 und einem korbartigen Gestell 25 besteht, das einzelne rohrförmige Aufnahmen 26 für die zu beschichtenden Gegenstände 23 aufweist. Im dargestellten Ausführungsbeispiel werden Brillengestelle beschichtet, die mit ihren Bügelenden in die rohrförmigen Aufnahmen 26 eingesteckt sind. Das zentrale Rohr 24 ist mit einer schlitzartigen Ausnehmung 27 versehen, in die ein Mitnehmer 28 eingreifen kann, der an einem teleskopartig zusammenschiebbaren Rohr 29 angeordnet ist, welches über eine biegsame Welle 30 antreibbar ist. Das zentrale Rohr 24 des Trägers 22 wird, nachdem dieser außerhalb der Kabine mit den zu beschichtenden Gegenständen 23 bestückt worden ist, auf das teleskopartige Rohr 29 aufgesteckt, welches unter dem Gewicht des Trägers 22 sich nach unten verschiebt. Hierdurch ist ein Einführen des Trägers 22 in die Beschichtungskabine 1 wesentlich erleichtert. Mit 31 sind Konsolen für die Halterung eines Lagers 32 bezeichnet, das zur Lagerung und Abstützung des teleskopartigen Rohres 29 dient. Für den Antrieb der biegsamen Welle 30 ist an dem kegelförmigen Boden 6 der Beschichtungskabine 1 ein Antriebsmotor 33 vorgesehen.

Durch die Drehung des Trägers 22, die stufenlos regulierbar ist, sowie durch die ebenfalls stufenlos regulierbare Verschiebebewegung der Sprühpistole 2 lassen sich sämtliche Gegenstände auf dem Träger 22 gleichmäßig mit dem durch die Sprühpistole 2 in die Beschichtungskabine 1 mittels eines Fördergases eingeführten Pulvers beschichten.

Bei der dargestellten Beschichtungskabine wird als Fördergas Stickstoff aus einer nicht dargestellten Flasche verwendet, welches frei von Verunreinigungen ist. Da die Beschichtungskabine während des Beschichtungsvorganges geschlossen ist, können die Oberflächen der zu beschichtenden Gegenstände 23 nicht verunreinigt werden. Das mittels der Sprühpistole eingeführte Fördergas und auch das dem Fluidboden 18 zugeführte Gas verlassen die Beschichtungskabine über den Stutzen 20 und das Filter 21. Das nicht an den Gegenständen 23 haften bleibende Pulver fällt in den zylindrischen Behälter, von wo es mittels einer nicht dargestellten Fördereinrichtung in Form eines Injektors, der ebenfalls mit Stickstoff betrieben wird, aus diesem Behälter heraus und zur Sprühpistole 2 gefördert wird. Es handelt sich also hier um einen geschlossenen Pulverkreislauf.

Nach dem Beschichtungsvorgang wird der Deckel 7 mittels des Druckluftzylinders 9 geöffnet um den Träger 22 aus der Beschichtungskabine entnehmen zu können. Damit das in der Beschichtungskabine noch schwebende Pulver nicht in die Umgebung entweicht wird ein nicht dargestelltes Sauggebläse eingeschaltet, welches ein beschleunigtes Absetzen des Pulvers in der Beschichtungskabine bewirkt.

Um bei einem Farbwechsel die Beschichtungskabine leichter reinigen zu können, kann diese schwenkbar gelagert sein.

**Ansprüche**

1. Verfahren zum elektrostatischen Auftragen von pulverförmigen Stoffen auf Werkstücken (23), bei dem der pulverförmige Stoff mittels eines Fördergases den zu beschichtenden Werkstücken (23) zugeführt und die nicht an den Werkstücken haftenden überschüssigen Stoffpartikel der Wiederverwendung zugeführt werden, dadurch gekennzeichnet, daß das Auftragen in einem gegen Eindringen von Umgebungsluft abgesperrten Beschichtungsraum (1) erfolgt, in den ausschließlich das zur Förderung des Pulvers notwendige Fördergas eingeführt wird, daß die in dem Beschichtungsraum (1) herrschende Gasströmung ausschließlich auf derjenigen Gasströmung beruht, die sich aus der Einführung des Pulvers ergibt, daß in dem Beschichtungsraum (1) ein geringer Überdruck gegenüber der Atmosphäre aufrecht erhalten wird und daß als Fördergas ein inertes explosionsverhinderndes Gas verwendet wird.

2. Verfahren nach Anspruch 1, dadurch gekennzeichnet, daß das Fördergas über eine Abscheidevorrichtung für den mitgeführten pulverförmigen Stoff aus dem geschlossenen Beschichtungsraum (1) abführbar ist.

3. Verfahren nach Anspruch 1 oder 2, dadurch gekennzeichnet, daß das überschüssige Pulver direkt aus dem Beschichtungsraum (1) wieder dem zum Auftragen verwendeten Förderstrom zugeführt wird.

4. Vorrichtung zur Durchführung des Verfahrens nach einem der Ansprüche 1 bis 3, mit einer Beschichtungskabine (1), einer in die Beschichtungskabine (1) hineinreichenden Pulver-Sprühpistole (2) und einer Abscheidevorrichtung, über die das Fördergas für den pulverförmigen Stoff aus der Beschichtungskabine (1) abführbar ist, dadurch gekennzeichnet, daß die Beschichtungskabine (1) gegen ein Eindringen von Umgebungsluft abgeschlossen und die Sprühpistole (2) abgedichtet in die Beschichtungskabine (1) eingeführt ist.

5. Vorrichtung nach Anspruch 4, dadurch gekennzeichnet, daß die Sprühpistole (2) in einer vorzugsweise durchsichtig ausgebildeten Platte (13) gehalten ist, die in abgedichteten Führungen (12) verschiebbar geführt ist.

6. Vorrichtung nach Anspruch 4 oder 5, dadurch gekennzeichnet, daß der Boden (18) der Beschichtungskabine (1) als Fluid-Boden bzw. Wirbelschicht-Boden ausgebildet ist, dem zur Fluidisierung des sich absetzenden pulverförmigen Stoffes das gleiche Gas zugeführt wird, wie es als Fördergas benutzt wird und daß der Raum über dem Fluidboden mit einer Vorrichtung zum Abziehen des überschüssigen Pulvers und Zuführen desselben zur Sprühpistole (2) versehen ist.

7. Vorrichtung nach einem der Ansprüche 4 bis 6, dadurch gekennzeichnet, daß die Beschichtungskabine (1) einen verschließbaren Deckel (7) zur Beschickung mit den zu beschichtenden Werkstücken (23) aufweist, die von einem Träger (22) aufnehmbar sind, der auf ein in der Beschichtungskabine (1) in Drehung versetzbares teleskopartig abgefedertes Aufnahmerohr (29) aufsteckbar ist, das einen Mitnehmer (28) für den Träger (22) aufweist.

8. Vorrichtung nach einem der Ansprüche 4 bis 7, dadurch gekennzeichnet, daß die Beschichtungskabine (1) schwenkbar gelagert ist.

## Claims

1. A process of electrostatically applying pulverulent substances to workpieces (23), in which the pulverulent substance is fed by an entraining gas to the workpieces (23) which are to be coated and the surplus particles of the substance which do not adhere to the workpieces are delivered for further use, characterized in that the application is effected in a coating chamber (1), which is sealed against an ingress of ambient air and is fed only with the entraining gas required to entrain the powder, the gas flow in the coating chamber (1) is only due to that gas flow which results from the feeding of the powder, a slightly superatmospheric pressure is maintained in the coating chamber (1) and an inert gas, which prevents explosions, is used as an entraining gas.

2. A process according to claim 1, characterized in that the entraining gas is adapted to be discharged from the sealed coating chamber (1) through a separator for the entrained pulverulent substance.

3. A process according to claim 1 or 2, characterized in that the surplus powder is directly fed from the coating chamber (1) to the entraining flow used to apply the powder.

4. Apparatus for carrying out the process according to any of claims 1 to 3, comprising a coating booth (1), a powder-spraying gun (2) extending into the coating booth (1), and a separator through which the gas entraining the pulverulent substance is adapted to be discharged from the coating booth (1), characterized in that the coating booth (1) is sealed against an ingress of ambient air and the spray gun (2) is sealed where it extends into the coating booth (1).

5. Apparatus according to claim 4, characterized in that the spray gun (2) is held in a preferably transparent plate (13), which is slidably guided in sealed tracks (12).

6. Apparatus according to claim 4 or 5, characterized in that the bottom (18) of the coating booth (1) consists of a fluid bottom or fluidized bed bottom which for the fluidization of the settling pulverulent substance is supplied with the same gas that is used as an entraining gas, and the space over the fluid bottom is provided with a device for withdrawing the surplus powder and for feeding the same to the spray gun (2).

7. Apparatus according to any of claims 4 to 6, characterized in that the coating booth (1) comprises a closable cover (7) for charging the workpieces (23) to be coated, which workpieces are adapted to be received by a carrier (22), which is spring-cushioned and adapted to be rotated in the coating booth (1) and comprises a coupling element (28) for connection to the carrier (22).

8. Apparatus according to any of claims 4 to 7, characterized in that the coating booth (1) is pivoted.

## Revendications

1. Procédé pour l'application électrostatique de matériaux pulvérulents à des pièces (23), dans lequel le matériau pulvérisant est amené, au moyen d'un gaz moteur, aux pièces à revêtir (23) et dans lequel les particules de matériau en surplus, non adhérentes aux pièces sont amenées au réemploi, caractérisé en ce que l'application se fait dans un espace d'application (1) protégé à l'égard de la pénétration de l'air extérieur et dans lequel on introduit exclusivement le gaz moteur nécessaire pour le transport de la poudre ; en ce que le flux gazeux qui règne dans l'espace d'application (1) repose exclusivement sur le flux gazeux qui résulte de l'introduction de la poudre ; en ce que l'on maintient dans l'espace d'application (1) une faible surpression par rapport à l'atmosphère ; et en ce que l'on utilise comme gaz moteur un gaz inerte anti-explosion.

2. Procédé selon la revendication 1, caractérisé en ce que le gaz moteur peut être évacué hors de l'espace d'application fermé (1) par l'intermédiaire d'un dispositif de séparation pour le matériau pulvérulent entraîné.

3. Procédé selon la revendication 1 et 2, caractérisé en ce que la poudre en surplus, depuis l'espace d'application (1), est directement à nouveau amenée dans le flux moteur utilisé pour l'application.

4. Dispositif pour l'exécution du procédé selon l'une quelconque des revendications 1 à 3, comportant une cabine d'application (1), un pistolet de pulvérisation de poudre (2) qui pénètre dans la cabine d'application (1) et un dispositif de séparation par l'intermédiaire duquel le gaz moteur du matériau pulvérulent peut être évacué hors de la cabine d'application (1), caractérisé en ce que la cabine d'application (1) est fermée à l'égard d'une pénétration de l'air ambiant et en ce que le pistolet de pulvérisation (2) est introduit de façon étanche dans la cabine d'application (1).

5. Dispositif selon la revendication 4, caractérisé en ce que le pistolet de pulvérisation (2) est fixé à une plaque (13), de préférence prévue transparente et qui peut coulisser dans des guides étanches (12).

6. Dispositif selon la revendication 4 et 5, caractérisé en ce que le fond (18) de la cabine d'application (1) est conçu sous forme de fond fluidisé ou fond à couche fluidisée, auquel on amène, pour fluidiser le matériau pulvérulent qui se dépose, le même gaz que celui que l'on utilise comme gaz moteur ; et en ce que l'espace situé au-dessus du fond fluidisé est muni d'un dispositif pour extraire la poudre en surplus et l'amener au pistolet de pulvérisation (2).

7. Dispositif selon l'une quelconque des revendications 4 à 6, caractérisé en ce que la cabine d'application (1) présente un couvercle (7) que l'on peut fermer pour alimenter avec les pièces (23) à revêtir qui peuvent être reçues par un support (22) que l'on peut enfiler sur un tube de réception (29), suspendu télescopiquement sur ressorts et que l'on peut mettre en rotation dans la cabine d'application (1), tube qui présente un entraîneur (28) pour le support (22).

8. Dispositif selon l'une quelconque des revendications 4 à 7, caractérisé en ce que la cabine d'application (1) est pivotante.

Fig. 1

# Fig. 3

0 066 837

*Fig. 2*